# EUROPÄISCHE PATENTSCHRIFT

(11) **EP 3 308 441 B1**
(45) Veröffentlichungstag und Bekanntmachung des Hinweises auf die Patenterteilung: **18.11.2020**
(21) Anmeldenummer: 16728006.4
(22) Anmeldetag: 08.06.2016
(51) Int. Cl.: H02J 3/32, H02J 13/00

(54) **SPEICHEREINHEIT FÜR EINEN VERBRAUCHER, SPEICHERSYSTEM SOWIE VERFAHREN ZUR STEUERUNG EINES SPEICHERSYSTEMS**
STORAGE UNIT FOR A CONSUMER, STORAGE SYSTEM AND METHOD FOR CONTROLLING A STORAGE SYSTEM
UNITÉ D'ACCUMULATEUR POUR UN CONSOMMATEUR, SYSTÈME D'ACCUMULATEUR ET PROCÉDÉ DE COMMANDE D'UN SYSTÈME D'ACCUMULATEUR

(30) Priorität: 09.06.2015 DE 102015109113
(43) Veröffentlichungstag der Anmeldung: 18.04.2018
(73) Patentinhaber: Volllast GmbH, 86987 Schwabsoien (DE)
(72) Erfinder: MADER, Tobias, 86987 Schwabsoien (DE)
(74) Vertreter: Prinz & Partner mbB
(86) Internationale Anmeldenummer: PCT/EP2016/063048
(87) Internationale Veröffentlichungsnummer: WO 2016/198458

(56) Entgegenhaltungen:
- EP-A1- 2 830 145
- US-A1- 2012 059 527
- US-A1- 2014 236 369

## Beschreibung

Die Erfindung betrifft eine Speichereinheit für einen Verbraucher, ein Speichersystem mit wenigstens einer Speichereinheit sowie ein Verfahren zur Steuerung eines Speichersystems.

In den letzten Jahren ist das Ökologiebewusstsein der Menschen gestiegen, weswegen immer mehr Energie durch erneuerbare Energiequellen bereitgestellt wird, um den steigenden Energiebedarf der Menschen abzudecken und den Anteil der fossilen Energiequellen zu reduzieren. Bei den erneuerbaren Energiequellen kann es sich beispielsweise um Windkraft oder Solarenergie handeln. Es werden Windkrafträder oder Solarmodule verwendet, um bei Wind bzw. Sonnenschein Energie zu erzeugen.

Da der Energiebedarf unabhängig von den Wetterbedingungen ist, müssen Möglichkeiten geschaffen werden, mit denen aus erneuerbaren Energiequellen erzeugte Energie gespeichert und bedarfsweise abgerufen werden kann.

Typischerweise werden Pumpspeicherkraftwerke verwendet, um derartige Kapazitäten zu schaffen und Energie zwischen zu speichern. Sofern über die erneuerbaren Energiequellen mehr Energie erzeugt als benötigt wird, kann die überschüssige Energie genutzt werden, um Wasser auf ein höheres potentielles Energieniveau zu pumpen. Sobald der Energiebedarf steigt und nicht mehr von der aktuell erzeugten Energie gedeckt wird, kann das hochgepumpte Wasser abgelassen werden, um elektrische Energie über Turbinen zu erzeugen. Mit den Pumpspeicherkraftwerken können so Schwankungen im Versorgungsnetz ausgeglichen bzw. Überkapazitäten abgebaut werden.

Als nachteilig hat sich hierbei herausgestellt, dass Pumpspeicherkraftwerke viel Platz brauchen und der Bau sowie die Wartung teuer sind.

Ein weiterer Aspekt betrifft die flächendeckende Versorgung, die mit einem stabilen Versorgungsnetz einhergeht. Aufgrund von geographischen Gegebenheiten kann beispielsweise in Süddeutschland weniger Energie aus Windkraft als in Norddeutschland erzeugt werden. Hieraus resultiert ein Gefälle hinsichtlich der zur Verfügung stehenden Kapazitäten, die für eine stabile Netzversorgung essentiell sind.

Im Stand der Technik sind ferner dezentrale Speichereinheiten bekannt, die bei Verbrauchern zum Einsatz kommen, beispielsweise wenn ein Solarmodul auf dem Dach eines Gebäudes des Verbrauchers vorgesehen ist. Diese Speichereinheiten werden verwendet, um das hausinterne Stromnetz direkt mit gewonnener Solarenergie zu versorgen. Erzeugte Überkapazitäten können die Speichereinheiten zudem direkt in ein Versorgungsnetz einspeisen. Der Privatanwender kann bei derartigen Speichereinheiten entscheiden, wie viel Energie in das Versorgungsnetz eingespeist oder direkt genutzt werden soll. Demnach variiert die in das Versorgungsnetz eingespeiste Energie, ohne dass der Netzbetreiber bzw. der Energieversorger hierauf Einfluss nehmen kann. Demnach stellen derartige Speichereinheiten keine verlässliche Möglichkeit dar, Schwankungen im Versorgungsnetz auszugleichen. Der Netzbetreiber bzw. der Energieversorger kann höchstens Daten der entsprechenden Speichereinheit abfragen.

Aus der US 2014/236369 A1, der EP 2 830 145 A1 und der US 2015/059527 A1 sind jeweils gattungsgemäße Speichereinheiten für Verbraucher bekannt, bei denen der Verbraucher jedoch Zugriff auf die Steuerung bzw. Einfluss darauf hat, wie viel Energie zwischengespeichert wird bzw. ob die zwischengespeicherte Energie zur Verfügung gestellt wird.

Die Aufgabe der Erfindung ist es, eine kostengünstige Möglichkeit bereitzustellen, mit der Schwankungen im Versorgungsnetz kostengünstig und in effizienter Weise ausgeglichen werden können.

Die Aufgabe wird erfindungsgemäß durch eine Speichereinheit für einen Verbraucher nach Anspruch 1 gelöst.

Die Aufgabe wird ferner durch ein erfindungsgemäßes Speichersystem nach Anspruch 8 gelöst.

Zudem wird die Aufgabe durch ein erfindungsgemäßes Verfahren zur Steuerung eines Speichersystems nach Anspruch 10 gelöst.

Der Grundgedanke der Erfindung ist es, eine dezentrale, für einen Verbraucher verwendbare Speichereinheit bereitzustellen, die als Zwischenspeicher fungiert und in einfacher Weise an das Stromnetz angeschlossen werden kann. Bei der Speichereinheit handelt es sich demnach um ein sogenanntes "Plug and Play"-Gerät, das sich von einem Verbraucher selbst über eine Steckdose in seinem Stromnetz anschließen lässt, also dem Stromnetz beim Verbraucher, das auch als Hausstromnetz bezeichnet werden kann. Ein Techniker, wie er zur Installation von Speichereinheiten nötig ist, die mit Photovoltaik-Anlagen zusammenarbeiten, ist hier üblicherweise nicht erforderlich (abgesehen von den Fällen, dass am Aufstellort keine Steckdose vorhanden ist und ein Elektriker eine Steckdose dort montieren und anschließen muss). Die Speichereinheit ist Teil eines Schwarmspeichers, der durch das Speichersystem gebildet wird, das die Steuerungseinrichtung und mehrere Speichereinheiten umfassen kann, über die ein großer virtueller Speicher ausgebildet wird.

Da die Speichereinheit nur mit der externen Steuerungseinrichtung kommuniziert und nur über diese steuerbar ist, ist sichergestellt, dass weder der Verbraucher noch eine unbefugte Person Zugriff auf die Steuerung der Speichereinheit hat. Die externe Steuerungseinrichtung kann bei einem Energieversorger oder Netzbetreiber eines Versorgungsnetzes vorgesehen sein, der mit dem Stromnetz verbunden ist. Der Energieversorger oder der Netzbetreiber hat über die Steuerungsschnittstelle Zugriff auf die wenigstens eine dezentrale Speichereinheit, sodass er die Speichereinheit von außerhalb steuern kann. Hierdurch ist es möglich, dass der Energieversorger oder der Netzbetreiber entscheidet, ob Energie aus dem Versorgungsnetz in der Speichereinheit zwischengespeichert oder ob zwischengespeicherte Energie von der Speichereinheit beim entsprechenden Verbraucher verbraucht werden soll, also in das Stromnetz des Verbrauchers (Hausstromnetz) eingespeist werden soll, wodurch das Versorgungsnetz entlastet wird. Der Energieversorger oder der Netzbetreiber betreibt somit den Schwarmspeicher.

Darüber hinaus kann optional vorgesehen sein, dass die gespeicherte Energie von der Speichereinheit in das Versorgungsnetz eingespeist wird.

Vorzugsweise wird die zwischengespeicherte Energie jedoch lediglich im Stromnetz des Verbrauchers genutzt, um Bezugslasten zu minimieren, indem die Speichereinheit dem Stromnetz bei Bedarf Energie zur Verfügung stellt, wodurch das Versorgungsnetz entlastet wird. Das Versorgungsnetz muss dann nämlich für den Verbraucher keine Energie bereitstellen, der die Speichereinheit hat.

Die Steuerung des Zugriffs auf den Schwarmspeicher kann vom Energieversorger oder vom Netzbetreiber auch auf einen externen Dienstleister übertragen werden. Dieser Steuerungs-Dienstleister steuert dann den Zugriff auf den Schwarmspeicher nach Vorgaben seines Auftraggebers, also nach Vorgaben des Energieversorgers oder des Netzbetreibers.

Bei dem Energieversorger kann es sich gleichzeitig um den Netzbetreiber handeln, der das Versorgungsnetz betreibt und unterhält. Dies ist jedoch nicht zwingend der Fall. Unabhängig davon, wer das Netz betreibt, kann die Steuerung des Schwarmspeichers von einem Steuerungs-Dienstleister übernommen werden, der nach Vorgaben des "Eigentümers" den Schwarmspeicher ansteuert.

Alternativ können der Netzbetreiber und der Energieversorger gleichzeitig Zugriff auf die Speichereinheit haben. Hierbei kann vorgesehen sein, dass der Netzbetreiber und der Energieversorger unterschiedliche Bereiche ansteuern können. Um sich widersprechende Ansteuerungen auszuschließen, kann vorgesehen sein, dass der Netzbetreiber dem Energieversorger Zugriffsrechte zuteilt oder umgekehrt. Im Regelfall wird jedoch nur einer der beiden Zugriff auf die Speichereinheit haben.

Gemäß einer weiteren Alternative oder ergänzend kann die externe Steuerungseinrichtung bei einem ausgewählten Dienstleister vorgesehen sein, der die Steuerung für den Energieversorger und/oder den Netzbetreiber übernimmt.

Im Folgenden wird zur besseren Lesbarkeit auf den Energieversorger oder den Netzbetreiber verwiesen. Aus oben genannten Szenarien geht jedoch hervor, dass andere Konstellationen möglich sind.

Sofern im Versorgungsnetz bzw. im Stromnetz Überkapazitäten vorliegen, kann die Speichereinheit von der externen Steuerungseinrichtung derart angesteuert werden, dass sie elektrische Energie zwischenspeichert. Sollte die zur Verfügung stehende elektrische Energie im Stromnetz nicht ausreichen, um den Energiebedarf abzudecken, kann die Steuerungseinrichtung die Speichereinheit derart ansteuern, dass sie die zwischengespeicherte elektrische Energie in das Stromnetz speist. Hierdurch wird das Versorgungsnetz (indirekt) entlastet.

Da nur der Netzbetreiber oder der Energieversorger Zugriff auf die Speichereinheit hat, kann die Speichereinheit in zuverlässiger Weise genutzt werden, um Energie zwischen zu speichern, die der Netzbetreiber oder der Energieversorger bei Bedarf abrufen kann. Entsprechend steht dem Netzbetreiber oder dem Energieversorger ein zuverlässiger Energiespeicher zur Verfügung, über den nur der Netzbetreiber oder der Energieversorger verfügen kann. Insbesondere ist die Speichereinheit bzw. die Steuerung nicht derart ausgebildet, dass sie selbsttätig zwischengespeicherte Energie in das Versorgungsnetz einspeist oder aus dem Versorgungsnetz zwischenspeichert.

Generell handelt es sich bei dem zwischengespeicherten Strom in der Speichereinheit um sogenannten Graustrom, der zuvor vom Energieversorger in das Versorgungsnetz eingespeist wurde. Die elektrische Energie, die in der wenigstens einen Speichereinheit gespeichert wird, wird über das Stromnetz aus dem Versorgungsnetz lediglich zwischengespeichert und steht dem Verbraucher nicht direkt zur Verfügung. Das bedeutet, der Verbraucher kann über die zwischengespeicherte Energie nicht selbst verfügen. Dementsprechend handelt es sich bei dem in der Speichereinheit zwischengespeicherten Strom (Graustrom) auch nicht um selbsterzeugten Strom (Grünstrom), der beispielsweise über eine Photovoltaik-Anlage erzeugt und vom Verbraucher zwischengespeichert wird.

Ein Aspekt sieht vor, dass das Stromnetz ein einphasiges Niederspannungsnetz oder ein dreiphasiges Drehstromnetz ist. Demnach kann es sich bei dem Stromnetz, an das die Speichereinheit angeschlossen wird, um ein häusliches Stromnetz handeln, das mit einem Versorgungsnetz gekoppelt ist. Das häusliche Stromnetz ist typischerweise über einen Hausanschlusskasten mit dem Versorgungsnetz verbunden. Aufgrund der unterschiedlichen Anschlussmöglichkeiten kann die Speichereinheit an verschiedenen Orten aufgestellt werden, wodurch die Flexibilität entsprechend hoch ist.

Die Speichereinheiten können in Privathaushalten oder in Industriegebäuden untergebracht werden, sofern diese nicht zur Speicherung von elektrischer Energie ausgerichtet sind. Demnach kann eine Speichereinheit beispielsweise auch in einem mittelständischen Betrieb vorgesehen sein.

Gemäß einem Aspekt umfasst die Schaltungsanordnung einen Wechselrichter und einen Gleichrichter, wobei der Gleichrichter über die Stromschnittstelle empfangenen Strom in Gleichstrom für den Energiespeicher umwandelt und/oder der Wechselrichter über die Stromschnittstelle ins Stromnetz einzuspeisenden Strom in Wechselstrom umwandelt. Über die Ausgestaltung der Schaltungsanordnung ist sichergestellt, dass die Speichereinheit Strom aus dem Stromnetz speichern und bei Bedarf gespeicherte elektrische Energie in das Stromnetz einspeisen kann.

Der Energiespeicher kann eine Speicherkapazität zwischen 1 kWh und 10 kWh haben, vorzugsweise 2 kWh. Ferner kann es sich bei dem Energiespeicher um einen Blei-, Blei-Gel-, Lithium-Ionen-, LiFEPO-, Lipo-, NiCd-, NiFe- oder NiMH-Akkumulator handeln. Durch die kleine Speicherkapazität des Energiespeichers ist sichergestellt, dass es sich bei der Speichereinheit um ein Gerät handelt, welches bei einem Verbraucher verwendet werden kann. Hieraus ergibt sich zudem, dass mit einer Speichereinheit lediglich ein Bruchteil des typischerweise vorliegenden Tagesbedarfs eines Privathaushalts abgedeckt werden kann.

Dementsprechend handelt es sich bei der Speichereinheit um eine mobile Einheit, mit der der Energieversorger schnell auf sich verändernde Situationen am Versorgungsmarkt reagieren kann. Dies betrifft einerseits die Schwankungen des Versorgungsnetzes und andererseits den Strompreis. Die Speichereinheit lässt sich demnach im Tagesverlauf mehrmals mit Energie laden und entladen, sofern dies nötig ist.

Ein weiterer Aspekt sieht vor, dass die Steuerungsschnittstelle eine drahtlose Schnittstelle oder eine kabelgebundene Schnittstelle ist, die auch zur Datenübertragung ausgebildet ist. Bei der Steuerungsschnittstelle kann es sich insbesondere um eine WLAN-, Z-Wave-, ZigBee-, Enocean-, Bluetooth-, Funk-, LAN-, Ethernet-, Powerline-, Koaxial- oder Glasfaser-Schnittstelle handeln. Über die entsprechende Steuerungsschnittstelle kann die Steuerungseinrichtung die Speichereinheit von extern ansteuern. Über die Ausbildung der Steuerungsschnittstelle als drahtlose Schnittstelle ist zudem sichergestellt, dass die Speichereinheit beim Verbraucher an einem Ort aufgestellt werden kann, an dem sonst kein Kabelanschluss außer dem Stromanschluss vorliegt.

Ein weiterer Aspekt sieht vor, dass sich weitere Geräte an die Speichereinheit anschließen lassen. Insbesondere weist die Speichereinheit hierzu weitere Kommunikationsschnittstellen auf. Bei den weiteren Geräten kann es sich beispielsweise um Multimediageräte und/oder Haushaltsgeräte handeln, welche sich über die Steuerungsschnittstelle mit der Speichereinheit verbinden lassen. Hierbei können die weiteren Geräte die Speichereinheit jedoch nicht ansteuern. Diese Ausführungsvariante ist insbesondere dann von Bedeutung, wenn es sich bei der Steuerungsschnittstelle um eine drahtlose Schnittstelle handelt, über die mehrere Geräte gleichzeitig angeschlossen werden können. Bei den weiteren, optionalen Kommunikationsschnittstellen kann es sich beispielsweise um USB-, LAN-, Ethernet-, HDMI- oder NFC-Schnittstellen handeln. Generell kann die Speichereinheit zur zentralen Kommunikationseinheit beim Verbraucher, insbesondere in einem Privathaushalt, ausgebildet werden, über die sämtliche Multimediageräte und/oder Haushaltsgeräte kommunizieren. Die mit der Speichereinheit verbundenen Geräte können unter anderem Verbrauchswerte an die Speichereinheit übermitteln, die vom Energieversorger direkt ausgelesen werden. Die Speichereinheit kann hierzu unter anderem ein Bus-System ausbilden.

Vorzugsweise weist die Speichereinheit ein Modem und/oder einen Router auf, sodass sich die Speichereinheit in einfacher Weise in ein Netzwerk des Verbrauchers einbinden lässt oder der vom Benutzer zum Errichten seines Heim-Netzwerks genutzt wird. Das Modem und/oder der Router weist dementsprechend zumindest die Steuerungsschnittstelle und/oder eine der Kommunikationsschnittstellen auf.

Die von den weiteren Geräten empfangenen Daten können über die auch zur Datenübertragung ausgebildete Steuerungsschnittstelle an den Energieversorger, den Netzbetreiber und/oder den Dienstleister übertragen werden. Bei den Daten kann es sich unter anderem um Nutzungsdaten von weiteren Geräten handeln, die sich im WLAN des Benutzers befinden, der die Speichereinheit angeschlossen hat.

Insbesondere ist die Speichereinheit Teil eines übergeordneten Speichersystems. Das Speichersystem stellt sicher, dass Schwankungen im Versorgungsnetz ausgeglichen werden können, da eine einzige Speichereinheit eine verhältnismäßig geringe Speicherkapazität aufweist, die nicht ausreichen würde, um die typischerweise auftretenden Schwankungen im Versorgungsnetz auszugleichen bzw. genügend Energie in Bedarfsfällen bereitzustellen. Über eine Vielzahl von Speichereinheiten ist es möglich, den Schwarmspeicher auszubilden, also einen großen virtuellen Speicher, der in der Realität durch die vielen kleinen Speichereinheiten gebildet ist. Hieraus ergibt sich zudem die Möglichkeit für den Energieversorger oder den Netzbetreiber schnell und präzise zu reagieren, da er einzelne kleine Speichereinheiten ansteuern kann.

Insbesondere ist die Steuerungseinrichtung eine zentrale, externe Steuerungseinrichtung, über die mehrere Speichereinheiten steuerbar sind. Die Steuerungseinrichtung kann, wie bereits erläutert, bei einem Energieversorger oder einem Netzbetreiber des Versorgungsnetzes vorgesehen sein, der sämtliche Speichereinheiten ansteuern kann, die zu seinem Einzugsgebiet gehören. Hierdurch ist es möglich, dass der Netzbetreiber das Versorgungsnetz überwacht und Schwankungen im Versorgungsnetz entsprechend ausgleicht, indem der Energiebedarf der einzelnen Verbraucher über die bei den Verbrauchern stehenden Speichereinheiten abgedeckt wird.

Alternativ kann dies auch ein Dienstleister oder der Energieversorger machen, dem der Netzbetreiber einen entsprechenden Zugang zum Versorgungsbereich gibt. Kapazitätsspitzen im Versorgungsnetz lassen sich so in einfacher Weise über die Vielzahl an Speichereinheiten puffern.

Dies gewährleistet ein stabiles Versorgungsnetz, da sich der Energieversorger darauf verlassen kann, dass die Speichereinheiten die von ihm vorgesehenen Kapazitäten bereitstellen können, wenn dies gewünscht ist. Die vielen, dezentral angeordneten Speichereinheiten, die jeweils nur eine verhältnismäßig kleine Speicherkapazität aufweisen, bilden einen großen virtuellen Speicher aus, der sich nur vom Energieversorger, vom Netzbetreiber oder von einem beauftragen Dienstleister kontrollieren und steuern lässt. Insbesondere trägt dies zur Stabilisierung des Versorgungsnetzes bei, da die vielen kleinen, dezentralen Speichereinheiten überall vorgesehen werden können.

Der Energiebedarf der einzelnen Haushalte bzw. Verbraucher wird somit durch die dort vorgesehenen Speichereinheiten abgedeckt, wodurch das Versorgungsnetz entlastet wird. Eine Rückspeisung in das Versorgungsnetz ist hierbei nicht vorgesehen. Insofern liegt eine indirekte Stabilisierung bzw. Entlastung des Versorgungsnetzes vor.

Gemäß einer bestimmten Ausführungsform kann vorgesehen sein, dass die Speichereinheiten Strom in das Versorgungsnetz einspeisen. Hierdurch lässt sich eine direkte Stabilisierung des Versorgungsnetzes realisieren. Bildlich gesprochen kann die Energie einer Speichereinheit über das Versorgungsnetz an einen anderen Verbraucher bzw. Haushalt übertragen werden, dessen Energiebedarf höher ist als die bei ihm zwischengespeicherte Energie oder der gar keine Speichereinheit hat.

Die Speichereinheit kann derart ausgebildet sein, dass ausschließlich der Netzbetreiber, der Energieversorger und/oder ein beauftragter Dienstleister über die Steuerungsschnittstelle Zugriff auf die Speichereinheit und die aus dem Versorgungsnetz zwischengespeicherte Energie haben bzw. hat. Der Netzbetreiber, der Energieversorger und/oder ein beauftragter Dienstleister können so die Menge der in der Speichereinheit gespeicherten Energie steuern, indem sie die Speichereinheit derart ansteuern, dass Energie in der Speichereinheit zwischengespeichert oder an das Stromnetz abgegeben wird, an das die Speichereinheit angeschlossen ist.

Der Verbraucher selbst hat keinen Einfluss, wie viel Energie zwischengespeichert wird bzw. ob die zwischengespeicherte Energie zur Verfügung gestellt wird, wie dies üblicherweise bei dezentralen Speichereinheiten der Fall ist, die mit einer Photovoltaik-Anlage betrieben werden bzw. mit dieser gekoppelt sind. Auch ein Fernzugriff des Verbrauchers über Mobilfunk, Internet oder eine Applikation auf dem Smartphone ermöglicht dem Kunden keinen Zugriff auf die Speichereinheit bzw. die in der Speichereinheit gespeicherte Energie.

Wenn Energie aus den Speichereinheiten in das Stromnetz eingespeist wird, erfolgt dies auf der Kundenseite des Zählers. Somit wirkt sich die Einspeisung im Gesamtnetz als Lastreduzierung aus.

Die Rückspeisung in das öffentliche Stromnetz (Versorgungsnetz), um Netzlasten zu reduzieren, stellt lediglich eine optionale Möglichkeit dar.

Da der Zugriff auf die Speichereinheit, insbesondere deren Steuerung, für den Verbraucher begrenzt ist, verbleibt die Speichereinheit vorzugsweise im Eigentum des Energieversorgers oder des Netzbetreibers, der das Versorgungsnetz betreibt, auch wenn die Speichereinheit beim Verbraucher vorgesehen ist. Alternativ kann die Speichereinheit auch im Besitz eines anderen Energieversorgers sein. Beispielsweise kann eine Speichereinheit von einem Energieversorger A angeboten werden, obwohl der Energieversorger B den Verbraucher mit Energie beliefert und hierauf auf das Versorgungsnetz des Netzbetreibers C zurückgreift. Die Speichereinheit kann auch Eigentum des Netzbetreibers C sein, obwohl der Energieversorger B den Verbraucher mit Energie beliefert.

Dem Verbraucher kann die Speichereinheit beispielsweise kostenlos oder in Zusammenhang mit einer modernen Kommunikationsdienstleistung angeboten werden, sodass ein zentrales Bus-System ohne Mehrkosten aufgebaut werden kann. Der Energieversorger hat durch den Schwarmspeicher den Vorteil, dass er aktiv am Strommarkt teilnehmen kann und Energie günstig einkaufen und zwischenspeichern kann, wobei sich diese Energie später teuer verkaufen lässt. Dagegen hat der Netzbetreiber ein Interesse am Schwarmspeicher, da er aufgrund der netzintegrierten Speichereinheiten u.a. Momentan-Reserven vorhalten kann, Möglichkeiten zur Spannungs- und Frequenzerhaltung erhält und der Versorgungswiederaufbau erleichtert ist.

Gemäß einem Aspekt puffert die Speichereinheit Schwankungen in einem Versorgungsnetz, an das das Stromnetz angeschlossen ist. Die Speichereinheit kann demnach als Energiepuffer für das Versorgungsnetz angesehen werden, der vom Energieversorger oder dem Netzbetreiber angesteuert wird, sodass die Speichereinheit zum stabilen Betrieb des Versorgungsnetzes beiträgt bzw. der Netzbetreiber das Versorgungsnetz stabil betreiben kann. Da nur der Energieversorger oder der Netzbetreiber Zugriff auf die Speichereinheit hat, ist zudem eine zuverlässige Steuerung sichergestellt, über die das Versorgungsnetz dauerhaft und zuverlässig stabil betrieben werden kann. Sollten die Verbraucher selbst Zugriff auf die Speichereinheiten haben, so wäre dies nicht der Fall, da dann möglicherweise keine elektrische Energie mehr zur Verfügung steht, die in das Stromnetz eingespeist werden könnte, um das Versorgungsnetz indirekt zu entlasten.

Insbesondere entlastet die am Stromnetz angeschlossene Speichereinheit das Versorgungsnetz, indem Energie an das Stromnetz abgegeben wird, die vom Verbraucher des Stromnetzes verbraucht wird. Es handelt sich also um eine indirekte Entlastung des Versorgungsnetzes, da die Energie hierbei nicht in das Versorgungsnetz zurückgespeist wird. Die beim Verbraucher zwischengespeicherte Energie wird dort verwendet, wodurch das Versorgungsnetz entlastet wird, da dem an das Versorgungsnetz angeschlossenen Stromnetz keine Energie aus dem Versorgungsnetz zugeführt werden muss. Das entsprechende Stromnetz wird durch die Speichereinheit zumindest kurzzeitig versorgt.

Die Speichereinheit wird vorzugsweise ausschließlich vom Netzbetreiber, vom Energieversorger und/oder von einem beauftragter Dienstleister betrieben, sodass ausschließlich der Netzbetreiber, der Energieversorger und/oder ein beauftragter Dienstleister über die Steuerungsschnittstelle Zugriff auf die Speichereinheit und die aus dem Versorgungsnetz in der Speichereinheit zwischengespeicherte Energie haben bzw. hat. Der Verbraucher, bei dem die Speichereinheit steht, hat also keine Möglichkeit, die Speichereinheit selbst zu betreiben. Die Speichereinheit wird ausschließlich extern betrieben bzw. von extern angesteuert.

Die Speisung der Speichereinheit erfolgt ausschließlich über das Versorgungsnetz und das zwischengeschaltete Hausstromnetz, an dem die Speichereinheit angeschlossen ist. Demnach wird die Speichereinheit nicht durch eine Photovoltaik-Anlage mit Energie versorgt. Ein Anschluss für eine Photovoltaik-Anlage ist bei der Speichereinheit nicht vorgesehen, weswegen sie als anschlussfrei für eine Photovoltaik-Anlage bezeichnet werden kann.

Insbesondere ist vorgesehen, dass das Speichersystem mehrere Speichereinheiten umfasst, die gleichzeitig von der Steuerungseinrichtung angesteuert werden. Hierdurch ist es möglich, einen großen virtuellen Speicher zu bilden, der auch als Schwarmspeicher bezeichnet wird, da er mehrere reale Speichereinheiten umfasst. Die einzelnen Speichereinheiten lassen sich ansteuern, um Schwankungen im Versorgungsnetz auszugleichen und somit für die Stabilität des Versorgungsnetzes zu sorgen.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Darstellung einer erfindungsgemäßen Speichereinheit,
- Figur 2 eine schematische Darstellung eines erfindungsgemäßen Speichersystems, und

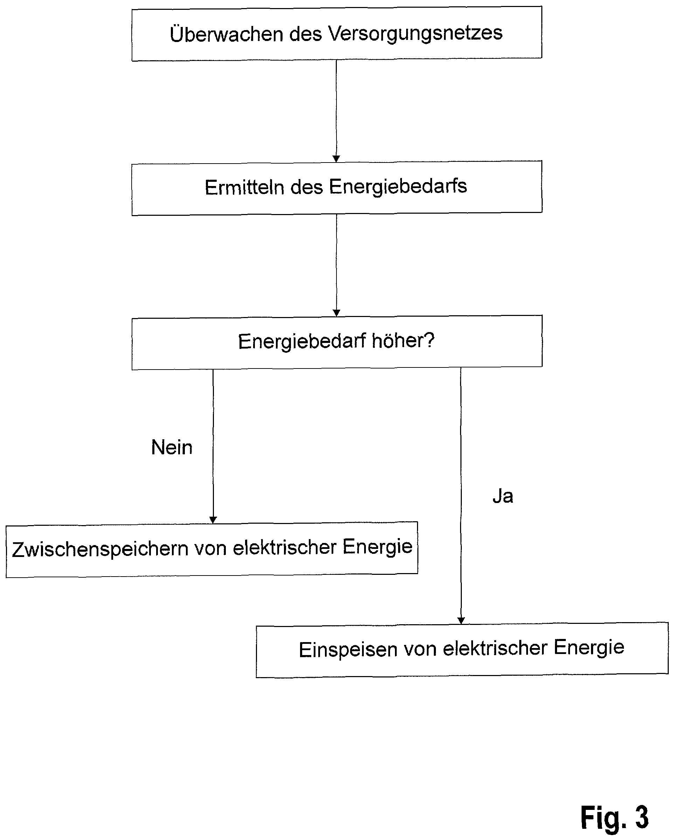

- Figur 3 ein Flussdiagramm zur Veranschaulichung des erfindungsgemäßen Verfahrens.

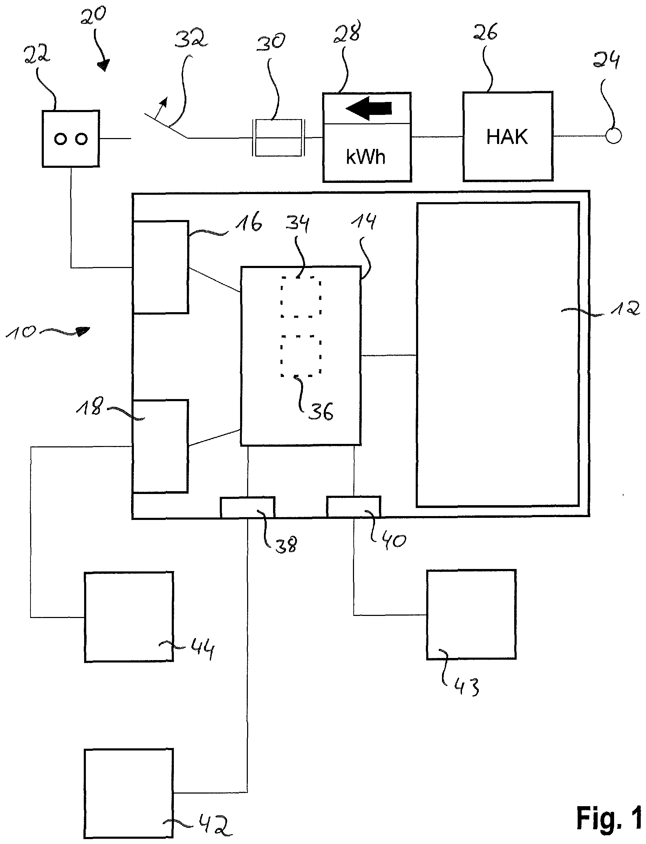

In Figur 1 ist eine Speichereinheit 10 für einen Verbraucher gezeigt, die einen Energiespeicher 12, eine Schaltungsanordnung 14, eine Stromschnittstelle 16 sowie eine Steuerungsschnittstelle 18 umfasst, die generell auch zur Datenübertragung ausgebildet ist. Bei dem Verbraucher handelt es sich im gezeigten Ausführungsbeispiel um einen Privathaushalt.

Die Speichereinheit 10 ist über die Stromschnittstelle 16 an ein Hausstromnetz 20 angeschlossen, indem die Stromschnittstelle 16 in der gezeigten Ausführungsform mit einer Haushaltssteckdose 22 elektrisch gekoppelt ist. Demnach handelt es sich bei der Speichereinheit 10 um ein sogenanntes "Plug and Play"-Gerät, das einfach in die Haushaltssteckdose 22 eingesteckt wird, um in Betrieb genommen zu werden.

Das Haushaltsstromnetz 20 ist über einen Anschluss 24 mit einem hier nicht dargestellten Versorgungsnetz verbunden. Der Anschluss 24 kann an einem Hausanschlusskasten 26 vorgesehen sein. Generell weist das Haushaltsstromnetz 20 zwischen dem Anschluss 24 und der Haushaltssteckdose 22 unter anderem einen Stromzähler 28, einen NZ-Widerstand 30 sowie einen FI-Schutzschalter 32 auf.

Die Speichereinheit 10 kann Energie über das Hausstromnetz 20 aus dem Versorgungsnetz zwischenspeichern, wobei die Schaltungsanordnung 14 hierzu einen Gleichrichter 34 umfasst, der den im Hausstromnetz 20 vorgesehenen Wechselstrom in einen Gleichstrom umwandelt, sodass die elektrische Energie dem Energiespeicher 12 zugeführt und dort gespeichert werden kann.

Bei dem Energiespeicher 12 handelt es sich um einen kleinen bis mittelgroßen Energiespeicher, der eine Speicherkapazität zwischen 1 kWh und 10 kWh hat, vorzugsweise 2 kWh. Dies entspricht lediglich einem Bruchteil des typischen Tagesbedarfs eines Privathaushalts. Der Energiespeicher 12 kann als ein Blei-, Blei-Gel-, Lithium-Ionen-, LiFEPO-, Lipo-, NiCd-, NiFe- oder NiMH-Akkumulator ausgebildet sein.

Da die Speichereinheit 10 lediglich zum Zwischenspeichern der elektrischen Energie aus dem Hausstromnetz 20 bzw. dem das Hausstromnetz 20 speisenden Versorgungsnetz vorgesehen ist, kann die Speichereinheit 10 zwischengespeicherte elektrische Energie vom Energiespeicher 12 in das Hausstromnetz 20 einspeisen. Hierzu weist die Schaltungsanordnung 14 einen Wechselrichter 36 auf, der den vom Energiespeicher 12 ausgehenden Gleichstrom in Wechselstrom umwandelt, sodass die elektrische Energie in das Hausstromnetz 20 eingespeist werden kann.

Der Gleichrichter 34 und der Wechselrichter 36 sind gestrichelt dargestellt, da sie integrale Bestandteile der Schaltungsanordnung 14 sind.

Die Steuerung der Speichereinheit 10 erfolgt nur über die Steuerungsschnittstelle 18, welche mit einer externen Steuerungseinrichtung kommuniziert, wie nachfolgend noch erläutert wird. Über die Steuerungsschnittstelle 18 erhält die Speichereinheit 10 die Steuerungssignale, wann die Speichereinheit 10 Energie aus dem Energiespeicher 12 ins Hausstromnetz 20 einspeisen bzw. Energie aus dem Hausstromnetz 20 im Energiespeicher 12 zwischenspeichern soll.

Ferner weist die Speichereinheit 10 in der gezeigten Ausführungsform zwei Kommunikationsschnittstellen 38, 40 auf, über die weitere Geräte 42, 43 mit der Speichereinheit 10 verbunden sind, bei denen es sich um Multimedia- und/oder Haushaltsgeräte handeln kann. Die weiteren Kommunikationsschnittstellen 38, 40 können kabelgebundene oder drahtlose Kommunikationsschnittstellen sein, beispielsweise eine USB-, WLAN- oder LAN-Schnittstelle. Alternativ kann es sich um Z-Wave-, ZigBee-, Enocean-, Bluetooth-, Funk-, Ethernet-, Powerline-, Koaxial- oder Glasfaser-Schnittstellen handeln.

Ein weiteres Gerät 44, das ebenfalls ein Multimedia- und/oder Haushaltsgerät sein kann, ist mit der Steuerungsschnittstelle 18 gekoppelt, die zur Datenübertragung ausgebildet ist, wie eingangs beschrieben wurde.

Dementsprechend kann es sich bei den weiteren Geräten 42 bis 44 um ein Multimedia-Gerät wie ein TV-Gerät, einen Computer, ein Notebook, ein Tablet oder ein Handy handeln. Ferner lassen sich kommunikationsfähige Haushaltsgeräte mit der Speichereinheit 10 über die entsprechenden Schnittstellen 18, 38, 40 verbinden. Kommunikationsfähige Haushaltsgeräte können Waschmaschinen, Wäschetrockner, Kaffeemaschinen, Kühlschränke, Geschirrspüler, Backöfen usw. sein. Die weiteren Geräte 42 bis 44 können Informationen an die im Haushalt zentrale Speichereinheit 10 übermitteln, wobei es sich beispielsweise um Energieverbrauchsdaten handeln kann. Diese Daten lassen sich über die Steuerungsschnittstelle 18 übertragen.

Der Besitzer des Privathaushalts kann die weiteren Geräten 42 bis 44 über die Speichereinheit 10 steuern. Ein Zugriff auf den Energiespeicher 12 und die gespeicherte Energie besteht für den Besitzer des Privathaushalts jedoch nicht.

Die Speichereinheit 10 umfasst insbesondere ein Modem und/oder ein Router, das bzw. der zumindest die Steuerungsschnittstelle 18 und/oder eine der Kommunikationsschnittstellen 38, 40 aufweist. Mit diesem Router kann der Nutzer auch sein Heim-Netzwerk (WLAN) errichten.

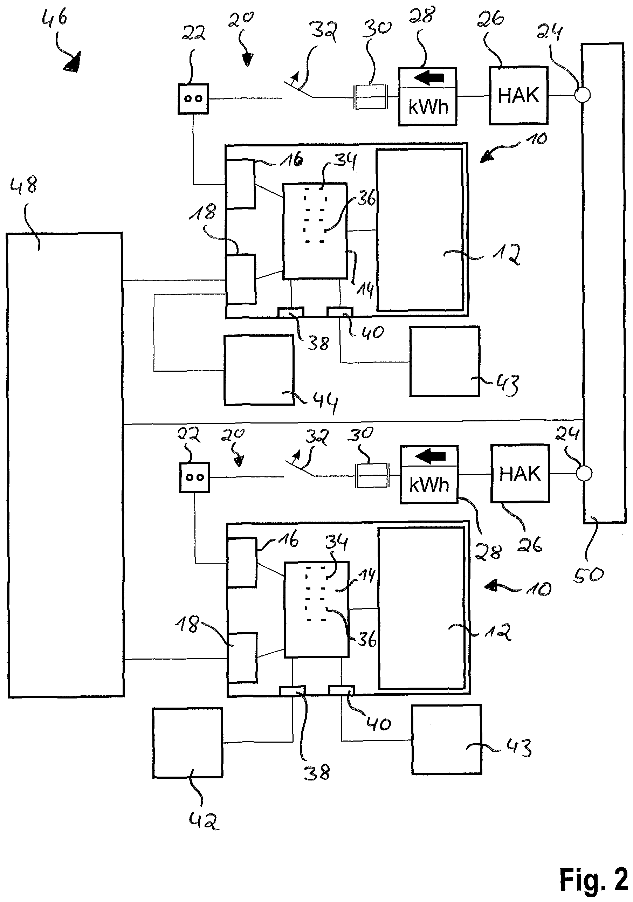

In Figur 2 ist ein Speichersystem 46 gezeigt, das in der gezeigten Ausführungsform zwei Speichereinheiten 10 aufweist, die jeweils über ihre Steuerungsschnittstelle 18 mit einer gemeinsamen zentralen Steuerungseinrichtung 48 verbunden sind.

Die Speichereinheiten 10 sind jeweils in einem eigenen Hausstromnetz 20 eingebunden, wobei die beiden Hausstromnetze 20 über ihre jeweiligen Anschlüsse 24 mit einem gemeinsamen Versorgungsnetz 50 verbunden sind. Demnach werden beide Hausstromnetze 20 von dem Versorgungsnetz 50 versorgt, das von einem Netzbetreiber betrieben wird, bei dem die Steuerungseinrichtung 48 vorgesehen sein kann. Alternativ kann die Steuerungseinrichtung 48 bei einem Energieversorger vorgesehen sein, der das Hausstromnetz 20 mit Energie über das Versorgungsnetz 50 versorgt. Hierbei tritt der Netzbetreiber als Dienstleister für den Energieversorger auf.

Ferner kann vorgesehen sein, dass die Steuerungseinrichtung 48 bei einem ausgewählten Steuerungs-Dienstleister steht, der die Steuerung des Speichersystems 46 übernimmt, insbesondere für den Energieversorger oder den Netzbetreiber.

Bildlich gesprochen sind in Figur 2 zwei getrennte Privathaushalte, beispielsweise zwei Einfamilienhäuser in einer Siedlung, gezeigt, die ihr eigenes Hausstromnetz 20 haben, die jeweils am gemeinsamen Versorgungsnetz 50 des Netzbetreibers angeschlossen sind, der die zentrale Steuerungseinrichtung 48 bedient. Beide Privathaushalte können zudem von einem gemeinsamen Energieversorger mit Energie versorgt werden.

Die zentrale Steuerungseinrichtung 48 ist ebenfalls mit dem Versorgungsnetz 50 gekoppelt, um das Versorgungsnetz 50 zu überwachen. Hierbei stellt die Steuerungseinrichtung 48 fest, ob Kapazitätsspitzen im Versorgungsnetz 50 vorliegen, die gepuffert werden müssen. Darüber hinaus stellt die zentrale Steuerungseinrichtung 48 fest, ob der Energiebedarf die im Versorgungsnetz 50 bzw. im entsprechenden Hausstromnetz 20 zur Verfügung stehende Energie übersteigt. Generell können somit Schwankungen im Versorgungsnetz 50 ausgeglichen werden.

Den Energiebedarf kann die zentrale Steuerungseinrichtung 48 ermitteln, da sie vorzugsweise mit den Speichereinheiten 10 verbunden ist, sodass die zentrale Steuerungseinrichtung 48 den Energiebedarf eines jeden Privathaushalts und somit den gesamten Energiebedarf aller am Versorgungsnetz 50 angeschlossenen Hausstromnetze 20 auf direktem Wege ermitteln kann. Andernfalls kann dies über das Versorgungsnetz 50 selbst festgestellt werden. Dies geschieht beispielsweise über die zur Datenübertragung ausgebildete Steuerungsschnittstelle 18. Hierüber können auch weitere Daten dem Energieversorger bzw. dem Netzbetreiber zur Verfügung gestellt werden, insbesondere Nutzungsdaten der angeschlossenen Geräte 42 bis 44.

Die zentrale Steuerungseinrichtung 48 ermittelt dann, ob der gesamte Energiebedarf höher ist als die zur Verfügung stehende elektrische Energie. Sofern dies der Fall ist, steuert die zentrale Steuerungseinrichtung 48 die einzelnen Speichereinheiten 10 derart an, dass in den jeweiligen Energiespeichern 12 zwischengespeicherte elektrische Energie in das der Speichereinheit 10 zugeordnete Hausstromnetz 20 eingespeist wird, um den Energiebedarf zu decken. Hierdurch wird das Versorgungsnetz 50 indirekt entlastet, da dem Hausstromnetz 20 des Verbrauchers die benötigte Energie durch die Einspeisung der zwischengespeicherten Energie aus der Speichereinheit 10 zugeführt wird. Bei der zwischengespeicherten Energie handelt es sich um zuvor aus dem Versorgungsnetz 50 erhaltende Energie, also sogenannten Graustrom.

Sollte die zentrale Steuerungseinrichtung 48 feststellen, dass der Energiebedarf niedriger als die im Versorgungsnetz 50 zur Verfügung stehende elektrische Energie ist, kann es die Speichereinheiten 10 derart ansteuern, dass die überschüssige elektrische Energie aus dem Versorgungsnetz 50 über die Hausstromnetze 20 in den jeweiligen Energiespeichern 12 der Speichereinheiten 10 zwischengespeichert wird.

Eine Einspeisung in das Hausstromnetz 20 ist auch möglich, wenn der Energieversorger Energie günstig erwerben kann und zu einem späteren Verbrauch in der Speichereinheit 10, insbesondere dem Energiespeicher 12, zwischenlagert.

Die Speicherung von elektrischer Energie in den Speichereinheiten 10 und die Entladung der Speichereinheiten 10 können somit unabhängig von der Netzsituation erfolgen.

Die Steuerung der jeweiligen Speichereinheiten 10 erfolgt demnach lediglich über die zentrale Steuerungseinrichtung 48. Die Besitzer der Privathaushalte können nicht die Speichereinheiten 10 derart ansteuern, dass sie Zugriff auf die Energiespeicher 12 haben. Es ist lediglich möglich, die weiteren Geräte 42 bis 44 anzusteuern, die an den Kommunikationsschnittstellen 38, 40 und der Steuerungsschnittstelle 18 angeschlossen sind.

Insbesondere ist vorgesehen, dass keine Rückspeisung in das Versorgungsnetz 50 möglich ist. Die in der bzw. den Speichereinheit(en) 10 zwischengespeicherte Energie wird demnach ausschließlich dem Hausstromnetz 20 zur Verfügung gestellt, wodurch Bezugslasten des Versorgungsnetzes 50 indirekt ausgeglichen werden.

Generell handelt es sich bei der in der bzw. den Speichereinheit(en) 10 zwischengespeicherten Energie um Energie, die der Energieversorger bereitstellt und die der Netzbetreiber zum Verbraucher weiterleitet, also sogenannten Graustrom. Die in der bzw. den Speichereinheit(en) 10 zwischengespeicherte Energie ist also keine selbsterzeugte Energie (Grünstrom), wie dies bei einer angeschlossenen Photovoltaik-Anlage der Fall ist.

Die Verbraucher, die eine Speichereinheit 10 nutzen möchten, müssen somit nicht zwingend eine teure Photovoltaik-Anlage haben. Dementsprechend ist der Markt für potentielle Nutzer der Speichereinheiten 10 deutlich größer und ein entsprechendes Speichersystem 46 lässt sich schneller aufbauen.

Zudem ist die Installation deutlich leichter, da der Verbraucher die Speichereinheit 10 einfach in eine Steckdose an seinem Hausstromnetz 20 anschließt. Ein Techniker zur Installation der Speichereinheit 10 wird üblicherweise nicht benötigt.

Mit dem Speichersystem 46 kann somit ein Schwarmspeicher ausgebildet werden, sofern viele dezentrale Speichereinheiten 10 in möglichst vielen Privathaushalten des Versorgungsnetzes 50 vorgesehen sind.

## Patentansprüche

1. Speichereinheit (10) für einen Verbraucher, mit
a) einem Energiespeicher (12), in dem elektrische Energie gespeichert werden kann,
b) einer Stromschnittstelle (16), über die die Speichereinheit (10) an ein mit einem Versorgungsnetz verbundenen Stromnetz (20) angeschlossen werden kann,
c) einer Schaltungsanordnung (14), die in Stromflussrichtung zwischen dem Energiespeicher (12) und der Stromschnittstelle (16) angeordnet ist, sodass die Speichereinheit (10) elektrische Energie aus dem Stromnetz (20) speichern und bei Bedarf gespeicherte elektrische Energie in das Stromnetz (20) einspeisen kann, und
d) einer Steuerungsschnittstelle (18) zur Steuerung der Speichereinheit (10),
**dadurch gekennzeichnet, dass** die Speichereinheit (10) nur über die Steuerungsschnittstelle (18) steuerbar ist, die nur mit einer externen Steuerungseinrichtung (48) kommuniziert,
wobei die Speichereinheit (10) über die Steuerungsschnittstelle (18) die Steuerungssignale erhält, wann die Speichereinheit (10) Energie aus dem Energiespeicher (12) ins Stromnetz (20) einspeisen bzw. Energie aus dem Stromnetz (20) im Energiespeicher (12) zwischenspeichern soll, wobei der Verbraucher selbst keinen Einfluss hat, wie viel Energie zwischengespeichert wird bzw. ob die zwischengespeicherte Energie zur Verfügung gestellt wird.

2. Speichereinheit (10) nach Anspruch 1, **dadurch gekennzeichnet, dass** das Stromnetz (20) ein einphasiges Niederspannungsnetz oder ein dreiphasiges Drehstromnetz ist.

3. Speichereinheit (10) nach Anspruch 1 oder 2, **dadurch gekennzeichnet, dass** die Schaltungsanordnung (14) einen Gleichrichter (34) und einen Wechselrichter (36) umfasst, wobei der Gleichrichter (34) über die Stromschnittstelle (16) empfangenen Strom in Gleichstrom für den Energiespeicher (12) umwandelt und/oder der Wechselrichter (36) über die Stromschnittstelle (16) ins Stromnetz (20) einzuspeisenden Strom in Wechselstrom umwandelt.

4. Speichereinheit (10) nach einem der vorhergehenden Ansprüche, **dadurch gekennzeichnet, dass** der Energiespeicher (12) eine Speicherkapazität zwischen 1kWh und 10kWh hat.

5. Speichereinheit (10) nach einem der vorhergehenden Ansprüche, **dadurch gekennzeichnet, dass** die Steuerungsschnittstelle (18) eine drahtlose Schnittstelle oder eine kabelgebundene Schnittstelle ist, die auch zur Datenübertragung ausgebildet ist.

6. Speichereinheit (10) nach einem der vorhergehenden Ansprüche, **dadurch gekennzeichnet, dass** an die Speichereinheit (10) weitere Geräte (42, 43, 44) angeschlossen sind.

7. Speichereinheit (10) nach einem der vorhergehenden Ansprüche, **dadurch gekennzeichnet, dass** die Speichereinheit (10) Teil eines übergeordneten Speichersystems (46) ist.

8. Speichersystem (46) mit einer Steuerungseinrichtung (48) und wenigstens einer Speichereinheit (10) nach einem der vorhergehenden Ansprüche, wobei die Steuerungseinrichtung (48) die Speichereinheit (10) steuert.

9. Speichersystem (46) nach Anspruch 8, **dadurch gekennzeichnet, dass** die Steuerungseinrichtung (48) eine zentrale, externe Steuerungseinrichtung ist, über die mehrere Speichereinheiten (10) steuerbar sind.

10. Verfahren zur Steuerung eines Speichersystems (46) nach Anspruch 8 oder 9, wobei die wenigstens eine Speichereinheit (10) von der Steuerungseinrichtung (48) derart angesteuert wird, dass die Speichereinheit (10) elektrische Energie aus einem Stromnetz (20) im Energiespeicher (12) zwischenspeichert und/oder elektrische Energie vom Energiespeicher (12) in das Stromnetz (20) speist.

11. Verfahren nach Anspruch 10, **dadurch gekennzeichnet, dass** die Speichereinheit (10) Schwankungen in einem Versorgungsnetz (50) puffert, an das das Stromnetz (20) angeschlossen ist.

12. Verfahren nach Anspruch 10 oder 11, **dadurch gekennzeichnet, dass** das Speichersystem (46) mehrere Speichereinheiten (10) umfasst, die gleichzeitig von der Steuerungseinrichtung (48) angesteuert werden.

## Claims

1. A storage unit (10) for a consumer, comprising
(a) an energy storage (12) in which electrical energy can be stored;
(b) a current interface (16), via which the storage unit (10) can be connected to a power grid (20) connected to a power supply system;
(c) a circuit arrangement (14) which is arranged between the energy storage (12) and the current interface (16) in the direction of current flow, so that the storage unit (10) can store electrical energy from the power grid (20) and feed stored electrical energy into the power grid (20) when required; and
(d) a control interface (18) for controlling the storage unit (10),
**characterized in that** the storage unit (10) is adapted to be controlled only via the control interface (18), which communicates only with an external control device (48),
wherein the storage unit (10) receives the control signals via the control interface (18) as to when the storage unit (10) is to feed energy from the energy storage (12) into the power grid (20) or temporarily store energy from the power grid (20) in the energy storage (12), the consumer himself/herself having no influence on how much energy is temporarily stored or whether the energy temporarily stored is made available.

2. The storage unit (10) according to claim 1, **characterized in that** the power grid (20) is a single-phase low-voltage network or a three-phase power network.

3. The storage unit (10) according to claim 1 or 2, **characterized in that** the circuit arrangement (14) comprises a rectifier (34) and a DC-AC converter (36), the rectifier (34) converting current received via the current interface (16) into direct current for the energy storage (12) and/or the DC-AC converter (36) converting current to be fed into the power grid (20) via the current interface (16) into alternating current.

4. The storage unit (10) according to any of the preceding claims, **characterized in that** the energy storage (12) has a storage capacity between 1 kWh and 10 kWh.

5. The storage unit (10) according to any of the preceding claims, **characterized in that** the control interface (18) is a wireless interface or a tethered interface, which is also configured for data transmission.

6. The storage unit (10) according to any of the preceding claims, **characterized in that** further devices (42, 43, 44) are connected to the storage unit (10).

7. The storage unit (10) according to any of the preceding claims, **characterized in that** the storage unit (10) is part of a master storage system (46).

8. A storage system (46) comprising a control device (48) and at least one storage unit (10) according to any of the preceding claims, wherein the control device (48) controls the storage unit (10).

9. The storage system (46) according to claim 8, **characterized in that** the control device (48) is a central external control device, via which a plurality of storage units (10) can be controlled.

10. A method of controlling a storage system (46) according to claim 8 or 9, wherein the at least one storage unit (10) is controlled by the control device (48) such that the storage unit (10) temporarily stores electrical energy from a power grid (20) in the energy storage (12) and/or feeds electrical energy from the energy storage (12) into the power grid (20).

11. The method according to claim 10, **characterized in that** the storage unit (10) buffers fluctuations in a power supply system (50) to which the power grid (20) is connected.

12. The method according to claim 10 or 11, **characterized in that** the storage system (46) comprises a plurality of storage units (10) which are controlled by the control device (48) simultaneously.

## Revendications

1. Unité de stockage (10) pour un consommateur, comprenant
a) un dispositif de stockage d'énergie (12) dans lequel il est possible de stocker de l'énergie électrique,
b) une interface de courant (16) par l'intermédiaire de laquelle l'unité de stockage (10) peut être raccordée à un réseau électrique (20) relié à un réseau d'alimentation,
c) un arrangement de circuit (14) qui est agencé entre le dispositif de stockage d'énergie (12) et l'interface de courant (16) dans le sens du flux de courant, de sorte que l'unité de stockage (10) peut stocker de l'énergie électrique provenant du réseau électrique (20) et peut alimenter le réseau électrique (20) en énergie électrique stockée en cas de besoin, et
d) une interface de commande (18) pour la commande de l'unité de stockage (10),
**caractérisée en ce que** l'unité de stockage (10) est apte à être commandée uniquement par l'intermédiaire de l'interface de commande (18) qui communique uniquement avec un moyen de commande externe (48),
l'unité de stockage (10) recevant par l'intermédiaire de l'interface de commande (18) les signaux de commande, quand l'unité de stockage (10) doit alimenter le réseau électrique (20) en énergie provenant du dispositif de stockage d'énergie (12) ou doit temporairement stocker de l'énergie provenant du réseau électrique (20) dans le dispositif de stockage d'énergie (12), le consommateur lui-même n'étant pas en mesure d'influencer combien d'énergie est temporairement stockée ou si l'énergie temporairement stockée est mise à disposition.

2. Unité de stockage (10) selon la revendication 1, **caractérisée en ce que** le réseau électrique (20) est un réseau basse tension monophasé ou un réseau électrique triphasé.

3. Unité de stockage (10) selon la revendication 1 ou 2, **caractérisée en ce que** l'arrangement de circuit (14) comprend un redresseur (34) et un onduleur (36), le redresseur (34) transformant du courant reçu par l'intermédiaire de l'interface de courant (16) en un courant continu pour le dispositif de stockage d'énergie (12), et/ou l'onduleur (36) transformant du courant à introduire dans le réseau électrique (20) par l'intermédiaire de l'interface de courant (16) en courant alternatif.

4. Unité de stockage (10) selon l'une des revendications précédentes, **caractérisée en ce que** le dispositif de stockage d'énergie (12) présente une capacité de stockage comprise entre 1kWh et 10kWh.

5. Unité de stockage (10) selon l'une des revendications précédentes, **caractérisée en ce que** l'interface de commande (18) est une interface sans fil ou une interface reliée par câble qui est également configurée pour la transmission de données.

6. Unité de stockage (10) selon l'une des revendications précédentes, **caractérisée en ce que** d'autre appareils (42, 43, 44) sont raccordés à l'unité de stockage (10).

7. Unité de stockage (10) selon l'une des revendications précédentes, **caractérisée en ce que** l'unité de stockage (10) fait partie d'un système de stockage supérieur (46).

8. Système de stockage (46) présentant un moyen de commande (48) et au moins une unité de stockage (10) selon l'une des revendications précédentes, le moyen de commande (48) commandant l'unité de stockage (10).

9. Système de stockage (46) selon la revendication 8, **caractérisé en ce que** le moyen de commande (48) est un moyen de commande externe central au moyen duquel plusieurs unités de stockage (10) sont aptes à être commandées.

10. Procédé de commande d'un système de stockage (46) selon la revendication 8 ou 9, ladite au moins une unité de stockage (10) étant commandée par le moyen de commande (48) de telle sorte que l'unité de stockage (10) stocke temporairement de l'énergie électrique provenant d'un réseau électrique (20) dans le dispositif de stockage d'énergie (12), et/ou alimente le réseau électrique (20) en énergie électrique provenant du dispositif de stockage d'énergie (12).

11. Procédé selon la revendication 10, **caractérisé en ce que** l'unité de stockage (10) amortit des fluctuations dans un réseau d'alimentation (50) auquel le réseau électrique (20) est raccordé.

12. Procédé selon la revendication 10 ou 11, **caractérisé en ce que** le système de stockage (46) comprend une pluralité d'unités de stockage (10) qui sont simultanément commandées par le moyen de commande (48).
